# EUROPEAN PATENT SPECIFICATION

(11) **EP 4 000 964 B1**
(45) Date of publication and mention of the grant of the patent: **16.07.2025**
(21) Application number: 20208807.6
(22) Date of filing: 20.11.2020
(51) Int. Cl.: B60C 17/04, B60B 21/12, B60C 17/06

(54) **PUNCTURE EMERGENCY SAFETY DEVICE FOR AUTOMOBILES**
REIFENPANNENNOTFALLSICHERHEITSVORRICHTUNG FÜR AUTOMOBILE
DISPOSITIF DE SÉCURITÉ D'URGENCE EN CAS DE CREVAISON POUR AUTOMOBILES

(43) Date of publication of application: 25.05.2022
(73) Proprietor: Shandong Hongguang Rubber Technology Co., Ltd., Weifang City, Shandong Province 261500 (CN)
(72) Inventor: Shan, Lili, Weifang City,, Shandong Province 261500 (CN)
(74) Representative: Cabinet Chaillot

(56) References cited:
- CN-U- 208 664 831
- CN-U- 210 652 554
- CN-U- 210 706 744

## Description

### BACKGROUND OF THE INVENTION

### 1. Field of the Invention

The invention relates to the field of automobiles, specifically relating to a puncture emergency safety device for automobiles.

### 2. Description of the Related Art

When the vehicle has tire punctured in its driving process, the tires loses the supporting force to be separated from the hub, and loses the friction force with the ground, causing the wheel to be out of control. After installation of the puncture emergency safety device, the tire can be effectively prevented from being separated from the hub, and can continuously support the wheel along with the pressure-loss tire, obtaining good ground grabbing force to guarantee the safety and controllability of the vehicle, thus avoiding accident. While among the prior art, the puncture emergency safety device adopts metal plate + nylon support framework mostly, which has disadvantages of heavy weight, easy rusty, high requirements for maintenance, high fault rate, and not suitable for overload load vehicle types.

Chinese utility model applications CN208664831U, CN210706744U and CN210652554U all disclose a puncture emergency safety device comprising a first rubber member, a second rubber member, a first connector which connects one end of the first rubber member with one end of the second rubber member, and a second connector which connects the other end of the first rubber member with the other end of the second rubber member, so as to form an annular structure.

### SUMMARY OF THE INVENTION

To solve above technical problems, the invention provides following technical plan: a puncture emergency safety device for automobiles comprising oppositely arranged first rubber member and second rubber member wherein one end of said first rubber member is connected with one end of the second rubber member via the first connector while the other end thereof is connected with the other end of the second rubber member via the second connector to enable the first rubber member and the second rubber member to attach and form an annular structure. Said first rubber member and second rubber member have same structures, including the manganese steel band arranged innermost layer thereof, the nylon layer at the outside of and wrapping the manganese steel band and the rubber layer out of and wrapping the nylon layer, and a plurality of strip-shaped grooves on the oppositely arranged surfaces of said first rubber member and second rubber member. Said second connector comprises a third connecting plate and a fourth connecting plate which are respectively arranged on two sides of two end portions of the first rubber member and the second rubber member, and said third connecting plate and said fourth connecting plate are respectively hinged with two ends of the buckle cover through rivets. Said buckle cover comprises a buckle cover bottom plate and buckle cover side plates arranged on two sides of the buckle cover bottom plate, and the buckle cover side plates are arranged on the outer sides of the third connecting plate and the fourth connecting plate Said buckle cover is an arc buckle cover.

As an improvement, said first connector comprises a first connecting plate and a second connecting plate which are respectively arranged on two sides of two end portions of the first rubber member and the second rubber member, a first U-shaped piece and a second U-shaped piece are respectively hinged between the first connecting plate and the second connecting plate wherein threaded holes are correspondingly formed in the middle portions of the first U-shaped piece and the second U-shaped piece with bolts arranged in the threaded holes in a matched mode, and said bolts sequentially penetrate through the first U-shaped piece and the second U-shaped piece to be connected and tightened with nut connecting piece.

As an improvement, the tightening torque for connecting and tightening said bolt and the nut connecting piece is at least 10 Nm.

As an improvement, a plurality of through holes are formed in the buckle cover bottom plate.

As an improvement, said through holes comprise strip-shaped through holes and round through holes.

As an improvement, said rivets and the buckle cover are both made of stainless steel materials.

After adopting following structure, the invention has following advantages: the invention, a puncture emergency safety device for automobiles, can save installation space and simplify fixing condition by virtue of oppositely arranged first rubber member and second rubber member; the invention has simple structure and easy to install, and at the same time, possesses function and advantages of rubber air spring and shock absorber which can exert function of bearing, buffering and shock absorbing.

### BRIEF DESCRIPTION OF THE DRAWINGS

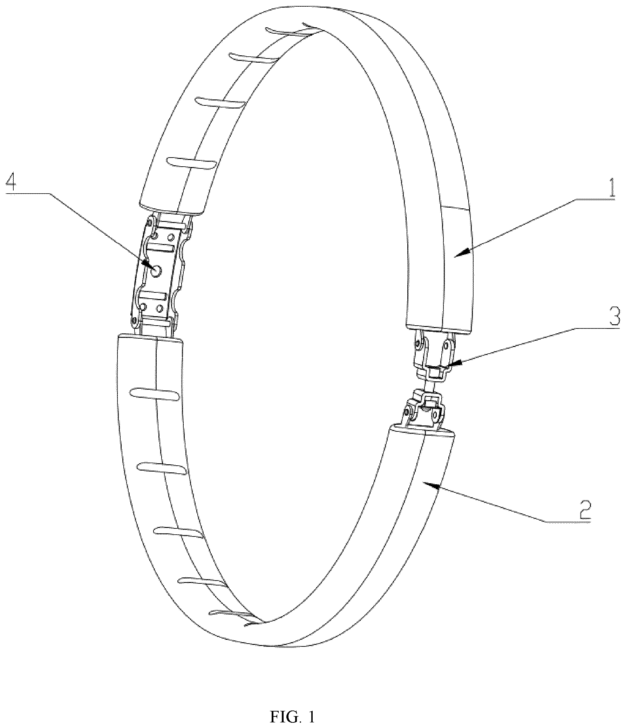

FIG.1 is the structural diagram of the puncture emergency safety device for automobiles in the invention.

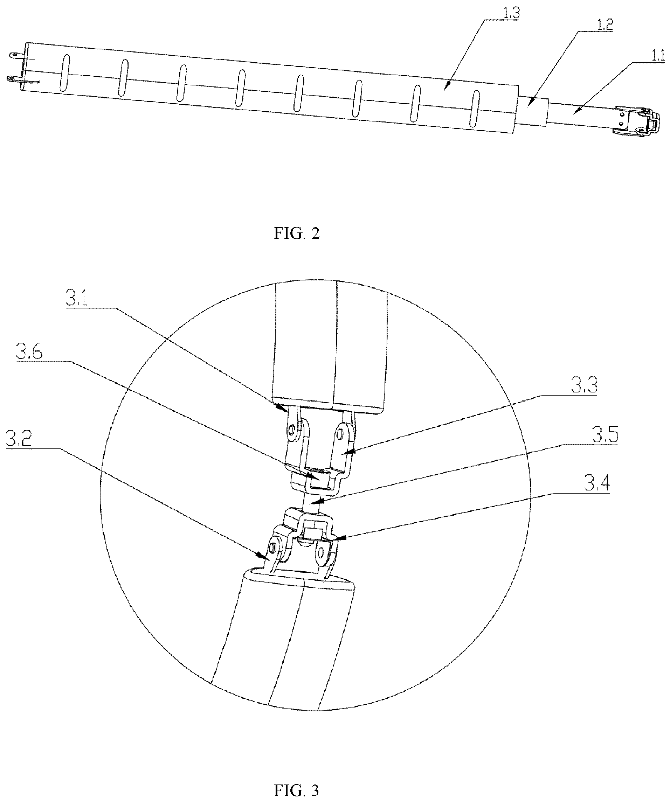

FIG.2 is the internal structural diagram of the first rubber member of the puncture emergency safety device for automobiles in the invention.
FIG.3 is the structural diagram of the first connector of the puncture emergency safety device for automobiles in the invention.

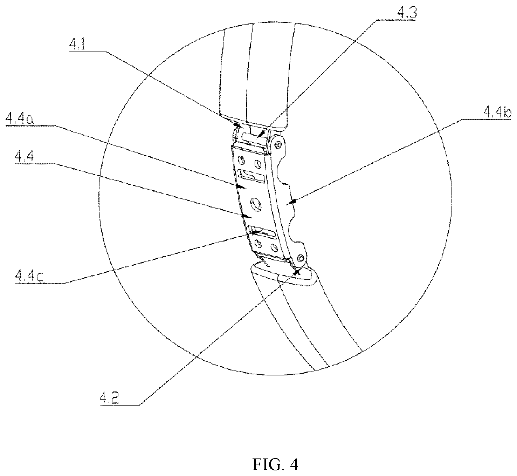

FIG.4 is the structural diagram of the second connector of the puncture emergency safety device for automobiles in the invention.

As shown in drawings, 1- first rubber member; 1.1- manganese steel band; 1.2- nylon layer, 1.3- rubber layer, 2- second rubber member, 3-first connector, 3.1- first connecting plate, 3.2- second connecting plate, 3.3- first U-shaped piece, 3.4- second U-shaped piece, 3.5- bolts, 3.6- nut connecting piece, 4- second connector, 4.1- third connecting plate, 4.2- fourth connecting plate, 4.3- rivet, 4.4- buckle cover, 4.4a- buckle cover bottom plate, 4.4b- buckle cover side plate, 4.4c- through holes.

### DETAILED DESCRIPTION OF THE PREFERRED EMBODIMENTS

With references to drawings, a puncture emergency safety device for automobiles comprises oppositely arranged first rubber member 1 and second rubber member 2 wherein one end of said first rubber member 1 is connected with one end of the second rubber member 2 via the first connector 3 while the other end thereof is connected with the other end of the second rubber member 2 via the second connector 4 to enable the first rubber member 1 and the second rubber member 2 to attach and form an annular structure. Said first rubber member 1 and second rubber member 2 have same structures, including the manganese steel band 1.1 arranged innermost layer thereof, the nylon layer 1.2 at the outside of and wrapping the manganese steel band 1.1 and the rubber layer 1.3 out of and wrapping the nylon layer 1.2, which means that the rubber layer 1.3, the nylon layer 1.2 and the manganese steel band 1.1 are arranged in sequence from outside to inside, and a plurality of strip-shaped grooves on the oppositely arranged surfaces of said first rubber member 1 and second rubber member 2.

As a preferred solution for the embodiment, said first connector 3 comprises a first connecting plate 3.1 and a second connecting plate 3.2 which are respectively arranged on two sides of two end portions of the first rubber member 1 and the second rubber member 2, a first U-shaped piece 3.3 and a second U-shaped piece 3.4 are respectively hinged between the first connecting plate 3.1 and the second connecting plate 3.2 wherein threaded holes are correspondingly formed in the middle portions of the first U-shaped piece 3.3 and the second U-shaped piece 3.4 with bolts 3.5 arranged in the threaded holes in a matched mode, and said bolts 3.5 sequentially penetrate through the first U-shaped piece 3.3 and the second U-shaped piece 3.4 to be connected and tightened with the nut connecting piece 3.6.

As a preferred solution for the embodiment, the tightening torque for connecting and tightening said bolt 3.5 and the nut connecting piece 3.6 is at least 10 Nm.

As a preferred solution for the embodiment, said second connector 4 comprises a third connecting plate 4.1 and a fourth connecting plate 4.2 which are respectively arranged on two sides of two end portions of the first rubber member 1 and the second rubber member 2, and said third connecting plate 4.1 and said fourth connecting plate 4.2 are respectively hinged with two ends of the buckle cover 4.4 through rivets 4.3.

As a preferred solution for the embodiment, said buckle cover 4.4 comprises a buckle cover bottom plate 4.4a and buckle cover side plates 4.4b arranged on two sides of the buckle cover bottom plate 4.4a, and the buckle cover side plates 4.4b are arranged on the outer sides of the third connecting plate 4.1 and the fourth connecting plate 4.2.

As a preferred solution for the embodiment, said buckle cover 4.4 is an arc buckle cover 4.4, and a plurality of through holes 4.4c are formed in the buckle cover bottom plate 4.4a.

As a preferred solution for the embodiment, said through holes 4.4c comprise strip-shaped through holes and round through holes.

As a preferred solution for the embodiment, said rivet 4.3 and the buckle cover 4.4 are both made of stainless steel materials.

The invention constitutes complete first rubber member 1 and second rubber member 2 via the manganese steel band 1.1 wrapping nylon layer 1.2 and rubber layer 1.3 and the first rubber member 1 and second rubber member 2 constitute a complete a puncture emergency safety device for automobiles via the second connector 4, wherein the nylon layer 1.2 plays the effect of strengthening the breaking strength, and the rubber layer 1.3 adopts high-strength and lightweight compounded rubber; the buckle cover 4.4 and rivet 4.3 adopt the punching press riveting form to connect together, and buckle cover 4.4 and rivet 4.3 all adopt stainless steel materials to avoid rusting and increase intensity; when in the process of using, the rubber members after connection is placed in the wheel rim groove, the first U-shaped piece 3.3 and the second U-shaped piece 3.4 are connected through connecting and tightening of the bolt in the first connector 3 and the nut connecting piece 3.6, then the first rubber member 1 and the second rubber member 2 are made into an annular structure.

The invention abandons the foreign metal plate+nylon supporting framework, and adopts a fully upgraded lightweight compounded rubber supporting system, which solves the problems of high assembly and maintenance requirements, high failure rate, unsuitability for overloaded vehicles and the like which are puzzled in the industry for many years; the product disclosed in the invention has captured integration of lightweight, stainless steel buckle, manganese steel metal plate, high-strength nylon cord and rubber; it adopts compounded rubber all supporting framework and "wheel hub recess sealing technique" whose technical principle is to seal and support for the wheel hub recess so as to prevent the rear rim from touching the earth and skidding after tire punctured, effectively avoiding the overturn accident due to out of control of vehicle.

The invention and its embodiments have been described above, but the description is not limited thereto; only one embodiment of the invention is shown in the drawings, and the actual structure is not limited thereto. In general, it is to be understood by those skilled in the art that non-creative design of structural forms and embodiments that are similar to the technical solutions without departing from scope defined in the appended claims shall all fall within the protective scope of the invention.

## Claims

1. A puncture emergency safety device for automobiles comprising oppositely arranged first rubber member (1) and second rubber member (2), wherein one end of said first rubber member (1) is connected with one end of the second rubber member (2) via a first connector (3) while the other end thereof is connected with the other end of the second rubber member (2) via a second connector (4) to enable the first rubber member (1) and the second rubber member (2) to attach and form an annular structure; said first rubber member (1) and second rubber member (2) having the same structure, including a manganese steel band (1.1) arranged at the innermost layer thereof, a nylon layer (1.2) at the outside of and wrapping the manganese steel band (1.1) and a rubber layer (1.3) out of and wrapping the nylon layer (1.2), **characterized in that** said structure of said first rubber member (1) and second rubber member (2) further includes a plurality of strip-shaped grooves on the oppositely arranged surfaces of said first rubber member (1) and second rubber member (2), wherein said second connector (4) comprises a third connecting plate (4.1) and a fourth connecting plate (4.2) which are respectively arranged on two sides of two end portions of the first rubber member (1) and the second rubber member (2), said third connecting plate (4.1) and said fourth connecting plate (4.2) are respectively hinged with two ends of a buckle cover (4.4) through rivets (4.3), wherein said buckle cover (4.4) comprises a buckle cover bottom plate (4.4a) and buckle cover side plates (4.4b) arranged on two sides of the buckle cover bottom plate (4.4a), and the buckle cover side plates (4.4b) are arranged on the outer sides of the third connecting plate (4.1) and the fourth connecting plate (4.2), and said buckle cover (4.4) is an arc buckle cover.

2. The puncture emergency safety device for automobiles of claim 1, wherein said first connector (3) comprises a first connecting plate (3.1) and a second connecting plate (3.2) which are respectively arranged on two sides of two end portions of the first rubber member (1) and the second rubber member (2), a first U-shaped piece (3.3) and a second U-shaped piece (3.4) respectively hinged between the first connecting plate (3.1) and the second connecting plate (3.2), wherein threaded holes are correspondingly formed in the middle portions of the first U-shaped piece (3.3) and the second U-shaped piece (3.4) with bolts (3.5) arranged in the threaded holes in a matched mode, and said bolts (3.5) sequentially penetrate through the first U-shaped piece (3.3) and the second U-shaped piece (3.4) to be connected and tightened with a nut connecting piece (3.6).

3. The puncture emergency safety device for automobiles of claim 2, wherein the tightening torque for connecting and tightening said bolt and the nut connecting piece (3.6) is at least 10 Nm.

4. The puncture emergency safety device for automobiles of claim 1, wherein a plurality of through holes (4.4c) are formed in the buckle cover bottom plate (4.4a).

5. The puncture emergency safety device for automobiles of claim 4, wherein said through holes (4.4c) comprise strip-shaped through holes and round through holes.

6. The puncture emergency safety device for automobiles of claim 1, wherein said rivets (4.3) and the buckle cover (4.4) are both made of stainless steel materials.

## Patentansprüche

1. - Reifenpannennotfall-Sicherheitsvorrichtung für Kraftfahrzeuge, umfassend ein erstes Gummielement (1) und ein zweites Gummielement (2), die einander gegenüberliegend angeordnet sind, wobei ein Ende des ersten Gummielements (1) über einen ersten Verbinder (3) mit einem Ende des zweiten Gummielements (2) verbunden ist, während das andere Ende davon über einen zweiten Verbinder (4) mit dem anderen Ende des zweiten Gummielements (2) verbunden ist, um zu ermöglichen, dass das erste Gummielement (1) und das zweite Gummielement (2) angebracht werden und eine ringförmige Struktur bilden; wobei das erste Gummielement (1) und das zweite Gummielement (2) die gleiche Struktur aufweisen, einschließlich eines Manganstahlbands (1.1), das an der innersten Schicht davon angeordnet ist, einer Nylonschicht (1.2) an der Außenseite des Manganstahlbands (1.1) und dieses umhüllend und einer Gummischicht (1.3) außerhalb der Nylonschicht (1.2) und diese umhüllend, **dadurch gekennzeichnet, dass** die Struktur des ersten Gummielementes (1) und des zweiten Gummielementes (2) ferner eine Vielzahl von streifenförmigen Rillen auf den gegenüberliegend angeordneten Oberflächen des ersten Gummielementes (1) und des zweiten Gummielementes (2) beinhaltet, wobei der zweite Verbinder (4) eine dritte Verbindungsplatte (4.1) und eine vierte Verbindungsplatte (4.2) umfasst, die jeweils auf zwei Seiten von zwei Endabschnitten des ersten Gummielements (1) und des zweiten Gummielements (2) angeordnet sind, die dritte Verbindungsplatte (4.1) und die vierte Verbindungsplatte (4.2) jeweils durch Nieten (4.3) an zwei Enden einer Schnallenabdeckung (4.4) angelenkt sind, wobei die Schnallenabdeckung (4.4) eine Schnallenabdeckung-Bodenplatte (4.4a) und Schnallenabdeckungs-Seitenplatten (4.4b) umfasst, die an zwei Seiten der Schnallenabdeckung-Bodenplatte (4.4a) angeordnet sind, und die Schnallenabdeckung-Seitenplatten (4.4b) an den Außenseiten der dritten Verbindungsplatte (4.1) und der vierten Verbindungsplatte (4.2) angeordnet sind, und die Schnallenabdeckung (4.4) eine gebogene Schnallenabdeckung ist.

2. - Reifenpannennotfall-Sicherheitsvorrichtung für Kraftfahrzeuge nach Anspruch 1, wobei der erste Verbinder (3) eine erste Verbindungsplatte (3.1) und eine zweite Verbindungsplatte (3.2), die jeweils an zwei Seiten von zwei Endabschnitten des ersten Gummielements (1) und des zweiten Gummielements (2) angeordnet sind, ein erstes U-förmiges Teil (3.3) und ein zweites U-förmiges Teil (3.4) umfasst, die jeweils zwischen der ersten Verbindungsplatte (3.1) und der zweiten Verbindungsplatte (3.2) angelenkt sind, wobei in den mittleren Abschnitten des ersten U-förmigen Teils (3.3) und des zweiten U-förmigen Teils (3.4) entsprechend Gewindelöcher gebildet sind, wobei Bolzen (3.5) in den Gewindelöchern in einem passenden Modus angeordnet sind, und die Bolzen (3.5) nacheinander das erste U-förmige Teil (3.3) und das zweite U-förmige Teil (3.4) durchdringen, um mit einem Mutterverbindungsteil (3.6) verbunden und festgezogen zu werden.

3. - Reifenpannennotfall-Sicherheitsvorrichtung für Kraftfahrzeuge nach Anspruch 2, wobei das Anzugsdrehmoment zum Verbinden und Anziehen der Schraube und des Mutterverbindungsteils (3.6) mindestens 10 Nm ist.

4. - Reifenpannennotfall-Sicherheitsvorrichtung für Kraftfahrzeuge nach Anspruch 1, wobei in der Schnallenabdeckung-Bodenplatte (4.4a) eine Vielzahl von Durchgangslöcher (4.4c) gebildet sind.

5. - Reifenpannennotfall-Sicherheitsvorrichtung für Kraftfahrzeuge nach Anspruch 4, wobei die Durchgangslöcher (4.4c) streifenförmige Durchgangslöcher und runde Durchgangslöcher umfassen.

6. - Reifenpannennotfall-Sicherheitsvorrichtung für Kraftfahrzeuge nach Anspruch 1, wobei die Nieten (4.3) und die Schnallenabdeckung (4.4) beide aus Edelstahl gefertigt sind.

## Revendications

1. - Dispositif de sécurité d'urgence en cas de crevaison pour automobiles, comprenant un premier élément en caoutchouc (1) et un second élément en caoutchouc (2) disposés en opposition, une extrémité dudit premier élément en caoutchouc (1) étant reliée à une extrémité du second élément en caoutchouc (2) par l'intermédiaire d'un premier connecteur (3) tandis que l'autre extrémité de celui-ci est reliée à l'autre extrémité du second élément en caoutchouc (2) par l'intermédiaire d'un second connecteur (4) pour permettre au premier élément en caoutchouc (1) et au second élément en caoutchouc (2) de s'attacher et de former une structure annulaire ; ledit premier élément en caoutchouc (1) et ledit second élément en caoutchouc (2) ayant la même structure, comprenant une bande en acier au manganèse (1.1) disposée à la couche la plus interne de celui-ci, une couche de nylon (1.2) à l'extérieur de la bande en acier au manganèse (1.1) et l'enveloppant, et une couche de caoutchouc (1.3) hors de la couche de nylon (1.2) et l'enveloppant, **caractérisé par le fait que** ladite structure dudit premier élément en caoutchouc (1) et dudit second élément en caoutchouc (2) comprend en outre une pluralité de rainures en forme de sillon sur les surfaces disposées en opposition dudit premier élément en caoutchouc (1) et dudit second élément en caoutchouc (2), ledit second connecteur (4) comprenant une troisième plaque de connexion (4.1) et une quatrième plaque de connexion (4.2) qui sont respectivement disposées sur deux côtés de deux parties d'extrémité du premier élément en caoutchouc (1) et du second élément en caoutchouc (2), ladite troisième plaque de connexion (4.1) et ladite quatrième plaque de connexion (4.2) étant respectivement articulées avec deux extrémités d'un couvercle à boucle (4.4) par l'intermédiaire de rivets (4.3), ledit couvercle à boucle (4.4) coomprenant une plaque inférieure de couvercle à boucle (4.4a) et des plaques latérales de couvercle à boucle (4.4b) disposées sur deux côtés de la plaque inférieure de couvercle à boucle (4.4a), et les plaques latérales de couvercle à boucle (4.4b) étant disposées sur les côtés extérieurs de la troisième plaque de connexion (4.1) et de la quatrième plaque de connexion (4.2), et ledit couvercle à boucle (4.4) étant un couvercle à boucle en arc.

2. - Dispositif de sécurité d'urgence en cas de crevaison pour automobiles selon la revendication 1, dans lequel ledit premier connecteur (3) comprend une première plaque de connexion (3.1) et une seconde plaque de connexion (3.2) qui sont disposées respectivement sur deux côtés de deux parties d'extrémité du premier élément en caoutchouc (1) et du second élément en caoutchouc (2), une première pièce en forme de U (3.3) et une seconde pièce en forme de U (3.4) articulées respectivement entre la première plaque de connexion (3.1) et la seconde plaque de connexion (3.2), des trous filetés étant formés de manière correspondante dans les parties centrales de la première pièce en forme de U (3.3) et de la seconde pièce en forme de U (3.4) avec des boulons (3.5) disposés dans les trous filetés dans un mode apparié, et lesdits boulons (3.5) pénètrent de manière séquentielle à travers la première pièce en forme de U (3.3) et la seconde pièce en forme de U (3.4) pour être connectés et serrés à l'aide d'une pièce de liaison à écrou (3.6).

3. - Dispositif de sécurité d'urgence en cas de crevaison pour automobiles selon la revendication 2, dans lequel le couple de serrage pour connecter et serrer ledit boulon et la pièce de liaison à écrou (3.6) est d'au moins 10 Nm.

4. - Dispositif de sécurité d'urgence en cas de crevaison pour automobiles selon la revendication 1, dans lequel plusieurs trous traversants (4.4c) sont formés dans la plaque inférieure de couvercle de boucle (4.4a).

5. - Dispositif de sécurité d'urgence en cas de crevaison pour automobiles selon la revendication 4, dans lequel lesdits trous traversants (4.4c) comprennent des trous traversants en forme de sillon et des trous traversants circulaires.

6. - Dispositif de sécurité d'urgence en cas de crevaison pour automobiles selon la revendication 1, dans lequel lesdits rivets (4.3) et le couvercle de boucle (4.4) sont tous réalisés en matériaux en acier inoxydable.
